(19) Europäisches Patentamt / European Patent Office / Office européen des brevets

(11) **EP 3 604 401 A1**

(12) **EUROPEAN PATENT APPLICATION**
published in accordance with Art. 153(4) EPC

(43) Date of publication:
**05.02.2020 Bulletin 2020/06**

(21) Application number: **18774777.9**

(22) Date of filing: **23.01.2018**

(51) Int Cl.:
*C08J 5/18* (2006.01)  *B29C 47/04* (2006.01)
*B29C 55/12* (2006.01)

(86) International application number:
**PCT/JP2018/001900**

(87) International publication number:
**WO 2018/179726 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.03.2017   JP 2017062979**
**28.03.2017   JP 2017062982**

(71) Applicant: **TOYOBO CO., LTD.**
**Osaka-shi**
**Osaka 530-8230 (JP)**

(72) Inventors:
• **GOTO Takamichi**
**Inuyama-shi**
**Aichi 484-8508 (JP)**
• **TAMARI Noboru**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY ORIENTED POLYESTER FILM AND METHOD FOR MANUFACTURING SAME**

(57)    The present invention provides a biaxially oriented polyester film that is suitable for a food packaging material subjected to a boiling sterilization treatment or a retort sterilization treatment, has excellent impact resistance, bending resistance and uniform mechanical properties and, simultaneously, renders an oligomer component contained in the film less likely to be eluted.

A biaxially oriented polyester film having following characteristics (a) to (d):
(a) the film comprises a resin composition containing 60 mass% or more of polybutylene terephthalate;
(b) a thickness precision in a widthwise direction of the film is 1 to 20% or less;
(c) an oligomer component contained in the film is 2000 to 12000 ppm; and
(d) a mass of the oligomer component eluted into a 50% ethanol solution is 0.02 mg or less per square inch of the film when the film is immersed in the 50% ethanol solution and heated at 66°C for 2 hours.

EP 3 604 401 A1

**Description**

TECHNICAL FIELD

The present invention relates to a polyester film used as a packaging material for contents requiring heat sterilization at high temperature, such as a boiling sterilization treatment and a retort sterilization treatment. More specifically, the present invention relates to a biaxially oriented polyester film that has excellent impact resistance, bending resistance, mechanical strength and uniform mechanical properties and, simultaneously, renders an oligomer component contained in the film less likely to be eluted, and relates to a method for producing the same.

BACKGROUND ART

A packaging material for a boiling sterilization treatment or a retort sterilization treatment adopts, for example, a laminate in which at least a transparent base film layer having a gas barrier property, an adhesive layer and sealant film layer are laminated in this order. It is disclosed that a technique that employs a biaxially stretched multilayer film that is produced by biaxially stretching a multilayer sheet comprising a polyester resin layer as a transparent base film layer having a gas barrier property and polyamide resin layer (for example, refer to Patent Document 1).

This conventional art yields the packaging material, which is excellent in terms of low elution of various chemicals, for the boiling sterilization treatment or retort sterilization treatment. The packaging material, however, has a problem of rupturing when dropped and easily leaking its contents because an impact applied to the packaging material easily separates the polyester resin layer and the polyamide resin layer apart at an interface therebetween.

It is disclosed that a technique that employs a biaxially oriented polybutylene terephthalate film, as a film used for the base layer, comprising at least either a polybutylene terephthalate resin or a polyester resin composition that is composed of 70 weight% or more of a polybutylene terephthalate resin and 30 weight% or less of another resin, such as a polyethylene terephthalate resin (for example, refer to Patent Document 2).

This conventional art renders a bag produced from a packaging material that utilizes this film less likely to rupture even when the bag is dropped.

The biaxially oriented polybutylene terephthalate film, however, primarily contains an oligomer component such as a cyclic dimer and cyclic trimer. These oligomer components have a problem of causing a deteriorated grade of an appearance of the film and spoiling flavors of its contents because the oligomers remaining in the film is easily eluted upon a high-temperature heating treatment such as the retort sterilization treatment. In addition, other film properties also have a point to be improved.

PRIOR ART DOCUMENTS

PATENT DOCUMENTS

Patent Document 1: JP2013154605A
Patent Document 2: JP2012214248A

SUMMARY OF INVENTION

TECHNICAL PROBLEM

The present invention has been made with the above-mentioned technical problems as a backdrop. That is, an object of the present invention is to provide a biaxially oriented polyester film that is suitable for a food packaging material subjected to a boiling sterilization treatment or a retort sterilization treatment, has excellent impact resistance, bending resistance and uniform mechanical properties and, simultaneously, renders an oligomer component contained in the film less likely to be eluted.

Besides, the biaxially oriented polyester film needs to be in conformity with a criterion indicated in FDA (U. S. Food and Drug Administration) §177.1660 when used for a food packaging purpose particularly in the U.S.

The above-mentioned Patent Documents disclosing the techniques neither concretely describe a means to prevent elution of the oligomer component in the polybutylene terephthalate film nor recognize the elution as their problems.

SOLUTIONS TO PROBLEM

As a result of thorough examinations to achieve such an object, the present inventors have found the followings and completed the present invention. Elution of an oligomer component in a biaxially oriented polyester film, after a retort sterilization treatment or a high-temperature heating treatment with a microwave oven, can be controlled to be within or below a specific range even though the film contains an equal amount of the oligomer component. In addition, the film can obtain excellent impact resistance, bending resistance and uniform mechanical properties. These characteristics can be achieved by: controlling the oligomer content in the biaxially oriented polybutylene terephthalate film to be within or below a specific range; rendering film thickness precision of the biaxially oriented polyester film uniform; and controlling a plane orientation degree of the biaxially oriented polyester film to be within a specific range. As a result, the film can prevent flavors of its contents from being spoilt and maintain its appearance grade. Also, the film can satisfy a criterion indicated in FDA (U. S. Food and Drug Administration) §177.1660 (c) (2) as a polybutylene terephthalate film.

That is, the present invention is as follows.

1. A biaxially oriented polyester film having following characteristics (a) to (d):

(a) the film comprises a resin composition containing 60 mass% or more of polybutylene terephthalate;
(b) a thickness precision in a widthwise direction of the film is 1 to 20%;
(c) an oligomer component contained in the film is 2000 to 12000 ppm; and
(d) a mass of the oligomer component eluted into a 50% ethanol solution is 0.02 mg or less per square inch of the film when the film is immersed in the 50% ethanol solution and heated at 66°C for 2 hours.

2. The biaxially oriented polyester film according to above 1, wherein a plane orientation coefficient of the film is 0.136 to 0.160.

3. A method for producing the biaxially oriented polyester film according to above 1 or 2, the method comprising following steps (a) to (f) and satisfying following requirement (g):

(a) a step of feeding the resin composition containing 60 mass% or more of polybutylene terephthalate into an extruder;
(b) a step of heating and melting the resin composition to produce a molten resin composition of 240 to 290°C;
(c) a step of laminating the molten resin composition to have 60 layers or more;
(d) a step of extruding the molten resin composition through a T-die to produce a molten resin composition sheet;
(e) a step of bringing the molten resin composition sheet into contact with a cooling roll and then cooling the sheet to produce an unstretched resin sheet;
(f) a step of biaxially stretching the unstretched sheet; and
(g) in the step (b), the time from when the molten resin composition reaches 240°C until it is extruded through the T-die is 2 to 13 minutes.

4. The method for producing the biaxially oriented polyester film according to above 3, wherein the biaxial stretching step is carried out by a simultaneous biaxial stretching method or a sequential biaxial stretching method.

ADVANTAGEOUS EFFECTS OF INVENTION

With the above-mentioned technique by the present inventors, it becomes possible to provide a biaxially oriented polyester film that is excellent in impact resistance, bending resistance and uniform mechanical properties that are suitable for a food packaging material to carry out a boiling sterilization treatment or a retort sterilization treatment. In addition, the technique renders the oligomer component in the film, after the retort sterilization treatment or a high-temperature heating treatment with a microwave oven, less likely to be eluted even though the film contains the oligomer component. As a result, the film can prevent flavors of its contents from being spoilt and maintain its appearance grade.

DESCRIPTION OF EMBODIMENTS

The present invention is now described in detail.

[Polyester Resin Composition]

A polyester resin composition used in the present invention is mainly composed of polybutylene terephthalate (may be abbreviated to PBT) resin, and the content rate of polybutylene terephthalate is 60 mass% or more. This content rate is more preferably 70 mass% or more. The content rate of less than 60 mass% leads to deteriorated impact strength and pinhole resistance, thus rendering these properties insufficient as film properties.

The polybutylene terephthalate resin used as the main component preferably contains, as a dicarboxylic acid component, 90 mol% or more of terephthalic acid. The content rate is more preferably 95 mol% or more, further preferably 98 mol% or more and the most preferably 100 mol%. The polybutylene terephthalate resin preferably contains, as a glycol component, 90 mol% or more of 1,4-butanediol. The content rate is more preferably 95 mol% or more and further preferably 97 mol% or more. The most preferably, the polybutylene terephthalate resin includes nothing other than a byproduct generated by an ether bond of 1,4-butanediol during its polymerization.

The polybutylene terephthalate resin contains an oligomer component such as a linear oligomer, cyclic dimer and cyclic trimer. A total content of the oligomer contained in the polybutylene terephthalate resin used in the present invention is preferably 12000 ppm or less, further preferably 10000 ppm or less and the most preferably 8000 ppm or less.

A means to control the oligomer content in the polybutylene terephthalate resin to be 12000 ppm or less is not limited, but a polybutylene terephthalate resin produced by melt polymerization is commonly subjected to subsequent solid phase polymerization.

The upper limit of the total content of these oligomers contained in the polybutylene terephthalate resin used in the present invention is preferably 12000 ppm, more preferably 10,000 ppm, and particularly preferably 5000 ppm. From the viewpoint of reducing the content of oligomers in the resulting film, it is preferable to reduce the content of oligomers in the polybutylene terephthalate resin as much as possible. This, however, requires much polymerization time during the solid phase polymerization process, being disadvantageous from a perspective of productivity. In addition, if the content of the oligomer is less than the above value, the improving effects on low elution or aroma retention may be saturated, so that the lower limit of the content is 2000 ppm.

The polyester resin composition used in the present invention may contain a polyester resin other than polybutylene terephthalate for the purpose of adjusting film formability during biaxial stretching and mechanical properties of a produced film.

Examples of the polyester resin other than polybutylene terephthalate include: a polyester resin, such as polyethylene terephthalate (may be abbreviated to PET), polyethylene naphthalate (may be abbreviated to PEN), polybutylene naphthalate (may be abbreviated to PBN) and polypropylene terephthalate (may be abbreviated to PPT); a polybutylene terephthalate resin produced by copolymerization with a dicarboxylic acid, such as an isophthalic acid, an orthophthalic acid, a naphthalenedicarboxylic acid, a biphenyldicarboxylic acid, a cyclohexanedicarboxylic acid, an adipic acid, an azelaic acid and a sebacic acid; and a polybutylene terephthalate resin produced by copolymerization with a diol component, such as ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol and polycarbonatediol.

The upper limit of addition amounts of these polyester resins other than polybutylene terephthalate is preferably less than 40 mass% and more preferably 30 mass% or less. An addition amount of the polyester resin other than polybutylene terephthalate of more than 40 mass% may deteriorate mechanical properties imparted to polybutylene terephthalate and cause not only insufficient impact strength, bag rupture resistance, and pinhole resistance of the film but also deteriorated transparency and a deteriorated gas barrier property of the film.

The lower limit of intrinsic viscosity of the polybutylene terephthalate resin used in the present invention is preferably 0.9 dl/g, more preferably 0.95 dl/g and further preferably 1.0 dl/g.

The polybutylene terephthalate resin, as a raw material, having intrinsic viscosity of less than 0.9 dl/g lowers intrinsic viscosity of a film produced by film formation and thus may lower puncture strength, impact strength, bag rupture resistance and the like of the film.

The upper limit of intrinsic viscosity of the polybutylene terephthalate resin is preferably 1.3 dl/g. The intrinsic viscosity exceeding the above value leads to excessive stress that is generated during stretching and thus may deteriorate film formability. Using the polybutylene terephthalate resin having high intrinsic viscosity requires high extrusion temperature because melt viscosity of the resin becomes high. Extrusion of the polybutylene terephthalate resin at higher temperature, however, may generate a decomposition product.

The polyester resin may, if necessary, contain a conventionally known additive such as lubricant, a stabilizer, a coloring agent, an antioxidant, an antistatic agent and an ultraviolet absorber.

As the lubricant, an inorganic lubricant, such as silica, calcium carbonate and alumina, and an organic lubricant are preferred. More preference is given to silica and calcium carbonate particulates. Amongst these two lubricants, silica particulates are particularly preferred from a perspective of reducing a haze of the film. These lubricants enable the film to exhibit transparency and lubricity simultaneously.

The lower limit of a concentration of the lubricant is preferably 100 ppm, more preferably 500 ppm and further preferably 800 ppm. The concentration below the above value may deteriorate film lubricity. The upper limit of the lubricant concentration is preferably 20000 ppm, more preferably 10000 ppm and further preferably 1800 ppm. The concentration exceeding the above value may deteriorate the transparency.

[Film Production Method]

A preferable method for producing a film according to the present invention is characterized by comprising the following steps (a) to (f) and the following condition (g) that will be described in order, but the method is not limited thereto.

(a) a step of feeding the resin composition containing 60 mass% or more of polybutylene terephthalate into an extruder
(b) a step of heating and melting the resin composition to produce a molten resin composition of 240 to 290°C
(c) a step of laminating the molten resin composition to have 60 layers or more
(d) a step of extruding the molten resin composition through a T-die to produce a molten resin composition sheet
(e) a step of bringing the molten resin composition sheet into contact with a cooling roll and then cooling the sheet to produce an unstretched resin sheet
(f) a step of biaxially stretching the unstretched sheet
(g) in the step (b), the time from when the molten resin composition reaches 240°C until it is extruded through the T-die is 2 to 13 minutes.

(a) A Step of Feeding the Resin Composition Containing 60 mass% or More of Polybutylene Terephthalate into an Extruder

The resin is fed into one extruder alone. Alternately, the resins may be fed into two or more extruders respectively and allowed to merge until extruded through the T-die.

(b) A Step of Heating and Melting the Resin Composition to Produce a Molten Resin Composition of 240 to 290°C

In the present invention, this step is carried out, during a step of melting and extruding a polyester raw material for film production, for the purpose of controlling the oligomer content in a biaxially oriented polyester film to be within the specific range. This step is carried out in a manner that: temperature of the resin in the extruder and in a melt line located between the extruder and the die is lowered as much as possible; staying time of the resin in the melt line located between the extruder and the die is shortened as much as possible; and the like.
The lower limit of temperature for melting the resin is preferably 240°C, more preferably 250°C and further preferably 260°C. The temperature of less than the above value may render a discharge of the resin unstable. The upper limit of temperature for melting the resin is 290°C and more preferably 280°C. The temperature exceeding the above value may stimulate decomposition of the resin, consequently increasing a content of the oligomer component remaining in a resultant film.

(c) A Step of Laminating the Molten Resin Composition to Have 60 Layers or More

As a specific example of a method for forming a multilayer, a conventional multilayer formation device (a multilayer feed block, a static mixer, a multilayer multimanifold and the like) can be utilized.
Upon laminating a thermoplastic resin to form a multilayer having uniform composition as described in the present invention, the above-mentioned multilayer formation device can be installed in the melt line located between the extruder and the die with a use of the single extruder.
Alternative example can be a use of a method by which thermoplastic resins supplied through different flow paths by at least two extruders are laminated to form a multilayer with a feed block, a static mixer, a multimanifold die or the like.
Polybutylene terephthalate has a higher crystallization rate than those of other crystalline polyester resins, such as polyethylene terephthalate, thus allowing its own crystallization to proceed during casting. Edge parts of an unstretched raw sheet is likely to have a high crystallinity degree because the edge parts are insusceptible to cooling.
At this time, in the case that the resin is cast into a single layer without being laminated to form a multilayer, a resultant unstretched raw sheet has no barrier that can inhibit crystal growth thereof. Owing to a lack of this inhibition, the unstretched raw sheet may allow its edge parts to grow into a spherulite of larger size than its center part. Hence, the sheet suffers from a large difference in a crystallinity degree in a widthwise direction thereof.
An attempt to increasing a plane orientation degree of the center part of the unstretched raw sheet to a specific range leads to an excessive plane orientation degree of its edge parts, which have the high crystallinity degree, even with the same stretch ratio. This excessive plane orientation degree consequently causes an uneven thickness precision and unstable film formability of the sheet, such as a film breakage in some cases.
On the other hand, an attempt to control a plane orientation degree of the edge parts of the unstretched raw sheet to a specific range lowers the plane orientation degree of the center part, being unable to prevent elution of the oligomer component.

(d) A Step of Extruding the Molten Resin Composition through a T-Die to Produce a Molten Resin Composition Sheet

This step is to extrude a molten polyester resin through a T-die and then casting the extruded resin onto a cooling roll. The lower limit of time for the resin to pass the melt line located between the extruder and the die (hereinafter referred to staying time) is preferably 2 minutes and more preferably 3 minutes. Controlling the passing time to be less than the above value requires a high discharge amount per unit time during a melting and extrusion step. This high discharge amount causes high pressure exerted by the molten resin during the melting and extrusion step, thus increasing a burden on the extruder and a polymer filter thereof.

The upper limit of the staying time is preferably 13 minutes, more preferably 11 minutes and further preferably 10 minutes. The staying time exceeding the above value may stimulate decomposition of the resin, consequently increasing a content of the oligomer component remaining in a resultant film.

(e) A Step of Bringing the Molten Resin Composition Sheet into Contact with a Cooling Roll and Then Cooling the Sheet to Produce an Unstretched Resin Sheet

This step is to extrude the molten resin and then cast the extruded resin onto the cooling roll. The lower limit of the cooling roll temperature is preferably -10°C. The temperature of less than the above value may saturate a crystallization inhibiting effect. The upper limit of the cooling roll temperature is preferably 40°C. The temperature exceeding the above value leads to an excessive crystallinity degree and thus may cause difficulty in stretching the resin. Also, upon controlling the cooling roll temperature to be within the above range, preference is given to a low humidity environment in the vicinity of the cooling roll for preventing dew condensation.

In the casting, the high-temperature resin increases surface temperature of the cooling roll owing to its contact with the surface of the roll. The cooling roll is cooled typically by flowing cooling water through a pipe set inside the roll. The cooling roll is needed to have a small difference in its surface temperature in a widthwise direction thereof by means of: supplying sufficient cooling water; setting the pipe effectively; carrying out maintenance not to allow sludge to stick to the pipe; or the like. A thickness of the unstretched sheet, at this time, is preferably within a range of 15 to 2500 pm.

The above-described casting is carried out to form the multilayer structure having at least 60 layers or more, more preferably 250 layers or more and further preferably 1000 layers or more. If the number of layers is small, a stretchability improving effect is lost.

Regarding thickness unevenness of the unstretched sheet in full width of the roll, a difference between the maximum and minimum thicknesses of the sheet in the full width is preferably within a range of 0 to 20% and more preferably within a range of 0 to 15% relative to average thickness (thickness precision) of the sheet. The difference exceeding 20% is not preferable because it causes a deteriorated roll appearance, distortion during secondary processing and the like. To reduce the difference between the maximum and minimum thicknesses needs a uniform stretch ratio in the width direction, and this uniform stretch ratio necessitates a uniform crystallinity degree in an unstretched state of the sheet.

(f) A Step of Biaxially Stretching the Unstretched Sheet

A stretching method for the sheet can be either a simultaneous biaxial stretching method or a sequential biaxial stretching method. However, in order to increase the impact strength of the film and prevent elution of oligomer components contained in the film, it is necessary to increase the plane orientation coefficient. Further, the sequential biaxial stretching is most preferable from the viewpoint of high film forming speed and high productivity.

The lower limit of stretching temperature in a machine stretching direction (hereinafter abbreviated to MD) is preferably 55°C and more preferably 60°C. The temperature of less than 55°C may easily cause not only breakage but also too strong orientation in the machine direction owing to stretching at such low temperature. This tendency of breakage renders film formability during a biaxial stretching step unstable and leads to high shrinkage stress upon a heat-setting treatment. This high shrinkage stress increases distortion of molecular orientation in a widthwise direction, consequently deteriorating a rectilinear tearing property in the longitudinal direction in some cases. The upper limit of stretching temperature in the MD is preferably 100°C and more preferably 95°C. The temperature exceeding 100°C not only causes deterioration of mechanical properties of a resultant film but also may lead to a tendency of the oligomer component in the film to be eluted because no orientation is formed at such temperature.

The lower limit of a stretch ratio in the MD is preferably 2.6 times and particularly preferably 2.8 times. The ratio of less than the above value may deteriorate mechanical properties and thickness unevenness of a resultant film because no orientation is formed at such a ratio. In addition, the ratio of less than the above value may also leads to a tendency of the oligomer component in the film to be eluted owing to an insufficiently oriented crystallization. The upper limit of the stretch ratio in the MD is preferably 4.3 times, more preferably 4.0 times and particularly preferably 3.8 times. The ratio exceeding the above value causes too strong orientation in the machine direction by stretching, leading to a tendency of breakage. It not only causes unstable film formability during a biaxial stretching step but also may saturate improving effects on mechanical strength and thickness unevenness of the film. In addition, orientation in the longitudinal direction strengthens and hence leads to high shrinkage stress upon a heat-setting treatment. As a result, an increase in distortion of molecular orientation in a widthwise direction is caused, consequently deteriorating a rectilinear tearing property in the longitudinal direction in some cases.

The lower limit of stretching temperature in a transverse stretching direction (hereinafter abbreviated to TD) is preferably 60°C. The temperature of less than the above value may easily cause breakage. The upper limit of stretching temperature in the TD is preferably 100°C. The temperature exceeding the above value may deteriorate mechanical properties of a resultant film because no orientation is formed at such a temperature. In addition, the temperature exceeding the above value may also leads to a tendency of the oligomer component in the film to be eluted owing to an insufficiently oriented crystallization.

The lower limit of a stretch ratio in the TD is preferably 3.5 times, more preferably 3.6 times and particularly preferably 3.7 times. The ratio of less than the above value may deteriorate mechanical properties and thickness unevenness of a resultant film because no orientation is formed at such a ratio. In addition, the ratio of less than the above value may also leads to a tendency of the oligomer component in the film to be eluted owing to an insufficiently oriented crystallization. The upper limit of the stretch ratio in the TD is preferably 5 times, more preferably 4.5 times and particularly preferably 4.0 times. The ratio exceeding the above value may saturate improving effects on mechanical strength and thickness unevenness of the film.

The lower limit of heat-setting temperature in the TD is preferably 200°C and more preferably 205°C. The temperature of less than the above value leads to a high heat shrinkage ratio, causing diverged position and shrinkage of a film upon processing in some cases. The upper limit of the heat-setting temperature in the TD is preferably 240°C. The temperature exceeding the above value may melt the film or would render it fragile even if the film is not melted.

The lower limit of relaxation ratio in the TD is preferably 0.5%. The ratio of less than the above value may easily cause breakage upon thermosetting. The upper limit of the relaxation ratio in the TD is preferably 5%. The ratio exceeding the above value not only may cause a sag and the like and then thickness unevenness of a film but also leads to high shrinkage in the longitudinal direction upon heat-setting. As a result, distortion of molecular orientation at edge parts of the film becomes large, thus deteriorating its rectilinear tearing property in some cases.

In the biaxially oriented film according to the present invention, the lower limit of its thickness is preferably 3 pm, more preferably 5 $\mu$m and further preferably 8 $\mu$m. The thickness of less than 3 pm may cause strength imparted to a film to be insufficient.

The upper limit of the thickness is preferably 100 pm, more preferably 75 $\mu$m and further preferably 50 pm. The thickness exceeding 100 pm is considered to be excessively thick, rendering processing for the object of the present invention difficult in some cases.

The upper limit of a thickness precision of the biaxially oriented polyester film according to the present invention is preferably 20%. The precision exceeding 20% causes uneven in-plane physical properties of a film, thus deteriorating film processability. Impact strength and the like may also deteriorate in some cases. The upper limit of the film thickness precision is more preferably 15% and further preferably 10%. The lower limit of the thickness precision of approximately 1% suffices.

A low thickness precision of an unstretched sheet is preferable to reduce a thickness precision of a film. As a stretching method to be employed for reducing the thickness precision of the film, a sequential biaxial stretching method is preferred to a simultaneous biaxial stretching method. A particular preference is given to the sequential biaxial stretching method in which an unstretched sheet is stretched in the MD and then stretched in the TD.

The upper limit of a total oligomer content in the biaxially oriented polyester film according to the present invention is 12000 ppm, more preferably 10000 ppm and further preferably 5000 ppm. As low an oligomer content in a film as possible is preferable, but the lower limit thereof is 2000 pp from a perspective of productivity and saturation of improving effects on low elution or aroma retention.

The lower limit of the total content of the oligomer contained in the biaxially oriented polyester film according to the present invention is preferably 2000 ppm and more preferably 2500 ppm. From the viewpoint of reducing the content of oligomers in the resulting film, it is preferable to reduce the content of oligomers in the polybutylene terephthalate as much as possible. This, however, requires much polymerization time during the solid phase polymerization process, being disadvantageous from a perspective of productivity. In addition, if the content of the oligomer is less than the above value, the improving effects on low elution or aroma retention may be saturated.

An oligomer elution amount of the biaxially oriented polyester film according to the present invention is 0.02 mg or less per square inch of an area of the film. The oligomer elution amount exceeding 0.02 mg causes a laminate formed therefrom to be inferior in aroma retention. The amount is more preferably 0.018 mg or less, further preferably 0.016 mg or less and particularly preferably 0.014 mg or less.

The oligomer elution amount in a film was measured as follows in accordance with FDA (U. S. Food and Drug Administration) §177.1660 (c) (2).

A resultant film as a sample was cut into 20 cm × 28 cm (560 cm$^2$ = 86 square inches) pieces. Each piece was immersed in 100 mL of 50% ethanol, and an extraction test was carried out at 66°C for 2 hours. Each of the resultant extracted solutions was dried, and the obtained extract was weighed. The measured weight was converted into the elution amount (mg) per square inch of the film area, defined as the elution amount.

The lower limit of the plane orientation coefficient of the biaxially oriented polyester film according to the present invention is preferably 0.136. The coefficient of less than 0.136 causes insufficient oriented crystallization, thus rendering the oligomer component in a film likely to be eluted in some cases. The upper limit of the plane orientation coefficient is preferably 0.160. The coefficient exceeding 0.160 is likely to cause breakage of the film during film formation, lowering productivity. Also, deterioration of film flexibility may be observed in some cases. The plane orientation coefficient can be controlled to be within the range by appropriately adjusting values for the MD stretch ratio or the heat-setting temperature.

As a stretching method to be employed for increasing the plane orientation coefficient of the film, a sequential biaxial stretching method is preferred to a simultaneous biaxial stretching method. A particular preference is given to the sequential biaxial stretching method in which an unstretched sheet is stretched in the MD and then stretched in the TD.

The biaxially oriented polyester film according to the present invention is preferably formed, over the entire area of the film, from a resin having uniform composition.

In addition, a layer formed from another material may be laminated on the biaxially oriented polyester film according to the present invention. As a method for the lamination, the layer may be laminated on the biaxially oriented polyester film according to the present invention after or during the film formation.

The lower limit of impact strength of the biaxially oriented polyester film according to the present invention is preferably 0.045 J/μm. The strength of less than the above value may be insufficient for bag application of the film.

The upper limit of the impact strength is preferably 0.2 J/μm. The strength exceeding the above value may saturate the improving effects.

The upper limit of a haze per thickness of the biaxially oriented polyester film according to the present invention is preferably 0.66%/μm, more preferably 0.60%/μm and further preferably 0.53%/pm.

The haze exceeding the above value may deteriorate qualities of the printed characters or images when they are printed on the film.

The lower limit of each heat shrinkage ratio, after heating at 150°C for 15 minutes, in the MD direction and the TD direction of the biaxially oriented polyester film according to the present invention is preferably -2.0%. The ratio of less than the above value may not only saturate the improving effects but also render the film mechanically fragile in some cases.

The upper limit of each heat shrinkage ratio, after heating at 150°C for 15 minutes, in the MD direction and the TD direction of the biaxially oriented polyester film according to the present invention is preferably 4.0%, more preferably 2% and further preferably 1.5%. The ratio exceeding the above value may change dimension of the film during processing, such as printing, and thus may cause pitch deviation and the like.

The biaxially oriented polyester film according to the present invention can achieve an excellent gas barrier propertie when formed into a laminate film with an inorganic thin film layer on at least one surface thereof.

As the inorganic thin film layer laminated on the biaxially oriented polyester film according to the present invention, a thin film formed from a metal or an inorganic oxide is preferably used.

A material used for forming the inorganic thin film layer may be any material that can be formed into a thin film, but, from a perspective of a gas barrier property, preferable examples of the material include an inorganic oxide such as silicon oxide (silica), aluminum oxide (alumina), a mixture of silicon oxide and aluminum oxide and the like. A particular preference is given to a composite oxide composed of silicon oxide and aluminum oxide from a perspective of achieving both flexibility and density of the thin film layer.

In the composite oxide, a preferable mixing ratio of silicon oxide and aluminum oxide is such that the concentration of Al is within a range of 20 to 70% by mass ratio of the metal content. The concentration of Al of less than 20% may deteriorate the barrier property against water vapor. On the other hand, the concentration exceeding 70% tends to harden the inorganic thin film layer. This tendency might break the film during secondary processing, such as printing and lamination, and thus might deteriorate the barrier property. The term "silicon oxide" as used herein refers to any one of various silicon oxides, such as SiO and SiO$_2$, or a mixture thereof. The term "aluminum oxide" refers to any one of various aluminum oxides, such as AlO and Al$_2$O$_3$, or a mixture thereof.

A thickness of the inorganic thin film layer is normally 1 to 800 nm, preferably 5 to 500 nm. The thickness of the inorganic thin film layer of less than 1 nm might fail to achieve an acceptable gas barrier property. On the other hand, even the thickness excessively increased to more than 800 nm cannot yield a gas barrier property-improving effect that is commensurate with such an increase, being disadvantageous from a perspective of bending resistance and production cost.

A method for forming the inorganic thin film layer may, without particular limitation, appropriately employ a known vapor deposition method, such as a physical vapor deposition method (PVD method), e.g., a vacuum vapor deposition method, a sputtering method and an ion plating method, or a chemical vapor deposition method (CVD method). Hereinbelow, a typical method for forming the inorganic thin film layer is described, with a silicon oxide-aluminum oxide-based thin film as an example. For example, upon employment of a vacuum vapor deposition method, the method preferably uses a mixture of $SiO_2$ and $Al_2O_3$, a mixture of $SiO_2$ and Al or the like as a vapor deposition raw material. As the vapor deposition raw material, particles are generally used. In this case, each of the particles desirably has such a size as not to cause change in pressure during the vapor deposition. A preferable particle diameter of each particle is 1 to 5 mm.

A heating mode for performing heating can be resistance heating, high-frequency induction heating, electron beam heating, laser heating or the like. As a reaction gas, the following gasses can be introduced: an oxygen gas, a nitrogen gas, a hydrogen gas, an argon gas, a carbon dioxide gas, a water vapor or the like. Alternatively, a reactive deposition method using means of ozone addition, an ion assist or the like may also be employed. In addition, a film formation condition may be varied appropriately, such as: applying a bias to a material to be subject to deposition (i.e., a laminate film to be subjected to deposition); and heating or cooling a material to be subjected to deposition. Upon employment of a sputtering method or a CVD method, the followings may also be varied as mentioned above: the deposition material, the reaction gas, the bias applied to a material to be subjected to deposition, the heating or cooling of a material to be subjected to deposition and the like.

In the biaxially oriented polyester film according to the present invention, a coating layer can be provided between the biaxially oriented polyester film and the inorganic thin film layer for the purpose of enabling a desired gas barrier property and desired laminate strength after a retort sterilization treatment.

Examples of the coating layer provided between the biaxially oriented polyester film and the inorganic thin film layer include a composition obtained by adding a curing agent, such as an epoxy curing agent, an isocyanate curing agent, and a melamine curing agent, to a resin, such as a urethane resin, a polyester resin, an acrylic resin, a titanium resin, an isocyanate resin, an imine resin, and a polybutadiene resin. Examples of the solvent include an aromatic solvent such as benzene and toluene; an alcohol solvent such as methanol and ethanol; a ketone solvent such as acetone and methyl ethyl ketone; an ester solvent such as ethyl acetate and butyl acetate; and a polyhydric alcohol derivative such as ethylene glycol monomethyl ether. These resin compositions used for the coating layer preferably contain a silane coupling agent having at least one or more organic functional groups. Examples of the organic functional groups include an alkoxy group, an amino group, an epoxy group, and an isocyanate group. The addition of the silane coupling agent further improves the laminate strength after a retort sterilization treatment.

Amongst the resin compositions used for the coating layer is preferably used a mixture of a resin containing an oxazoline group, an acrylic resin, and a urethane resin. The oxazoline group has high affinity with the inorganic thin film and can react with a metal hydroxide and an oxygen deficiency portion of an inorganic oxide that is generated during formation of the inorganic thin film layer, thus exhibiting firm adhesion to the inorganic thin film layer. An unreacted oxazoline group present in a coating layer can react with a carboxylic acid terminal that is generated by hydrolysis of a base film layer and the coating layer, thereby forming crosslinks.

A method for forming the coating layer can employ a conventionally known method such as a coating method but not particularly limited thereto. Examples of a suitable method amongst the coating method include an offline coating method and an in-line coating method. For an in-line coating method that is carried out in a step of producing a base film layer, a preferable conditions for drying and heat treatments upon coating is, though depending on a coating thickness or conditions of an apparatus, as follows. The base film layer is sent to a stretching step in a perpendicular direction immediately after coating and dried in a pre-heating zone or a stretching zone in the stretching step. In such a case, normally, the temperature is preferably controlled to approximately 50 to 250°C.

It is preferable for a retort packaging material according to the present invention to form a heat-sealable resin layer called a sealant. The heat-sealable resin layer is usually provided on a protective layer but may be provided on the outer side of the base film layer (a surface of the base film layer that is opposite to the surface on which the coating layer is formed). The formation of the heat-sealable resin layer is usually attained by an extrusion laminating method or dry laminating method. A thermoplastic polymer for forming the heat-sealable resin layer may be any thermoplastic resin that can sufficiently exhibit sealant adhesion. Examples thereof include a polyethylene resin, such as HDPE, LDPE and LLDPE, a polypropylene resin, an ethylene-vinyl acetate copolymer, an ethylene-$\alpha$-olefin random copolymer and an ionomer resin. Amongst these, the polyethylene resin is preferable as a resin having heat resistance that can withstand a retort sterilization treatment.

EXAMPLES

Next, the present invention will be described in more detail by way of examples. However, the present invention is not intended to be limited by the following examples. In the following examples, the evaluation of a film was carried out by the following measurement methods.

[Film Formation Stability]

Film formability of a biaxially stretched film was evaluated in accordance with the following criteria. A biaxially stretched film with the rating "○" was determined as having good productivity.
○: The film was formed without breakage and was produced continuously.
Δ: The film formability was somewhat unstable to a degree that caused the intermittent breakage of the film.
×: The breakage of the film occurred frequently, and thus the film was hard to be produced continuously.

[Film Thickness]

A measurement was carried out with a dial gauge in accordance with JIS K7130-1999 Method A. [Thickness Precision (Tv (%))]
A film piece was cut out from a center part of the resultant film roll towards its machine direction. Thickness of the film piece was measured at 100 points on the film piece with the dial gauge at a 5 cm pitch. A thickness precision (Tv) of the piece was then determined according to the following equation (1).

$$Tv\ (\%) = \{(Tmax - Tmin)/Tave\} \times 100\%) \qquad (1)$$

where:

    Tmax: maximum thickness
    Tmin: minimum thickness
    Tave: average thickness

[Haze]

A haze of a sample was measured at different three points at a sample in accordance with the method prescribed in JIS-K-7105 with a haze meter (NDH2000 available from Nippon Denshoku Industries Co., Ltd.). The average of the measured values was defined as the haze of the sample.

[Oligomer Contents in PBT Resin and Film]

A measuring method of oligomer contents in a produced PBT resin and a film is described below.
The PBT resin or the film was accurately weighed by 100 mg and dissolved in 3 mL of HFIP/chloroform (= 2/3 (vol/vol)). To the solution was added 20 mL of chloroform, and a polymer of the sample was deposited by 10 mL of methanol. After the deposited polymer was filtered, the filtrate was subjected to concentration to dryness, and then 10 mL of dimethylformamide was added thereto. The filtrate was subjected to HPLC analysis under the following condition to obtain a chromatogram.

- Apparatus: UFLC available from SHIMADZU CORPORATION
- Column: Shim-pack XR-ODS
  (2.2 pm 2 × 100 mm)
- Moving Phase: A: 0.2% of acetic acid, B: acetonitrile
  (0 minute (10%B) - 28(100) - 33(100) 33.01 (10)
- Flow Speed: 0.5 mL/min
- Column Temperature: 50°C
- Injected Amount: 5 pL
- Detection Wavelength: 258 nm

Quantitative values of linear and cyclic forms of the PBT oligomers were calculated by conversion of bishydroxyethyl terephthalate (BHET) and a PET cyclic trimer respectively. A total amount of all the detected oligomer components was defined as the oligomer content in the film.

[Oligomer Elution Amount]

An oligomer elution amount was measured in accordance with FDA (U. S. Food and Drug Administration) §177.1660 (c) (2) as an elution test of an oligomer in a film.

A produced film as a sample was cut into 20 cm × 28 cm (560 cm$^2$ = 86 square inches). Each piece was immersed in 100 mL of 50% ethanol, and an extraction test was carried out at 66°C for 2 hours. Each of the resultant extracted solutions was dried, and the obtained extract was weighed. The measured weight was converted into the elution amount (mg) per square inch of the film area, defined as the elution amount.

[Plane Orientation Coefficient of Film]

A samples was measured with regard to a film longitudinal-direction refractive index (Nx), a film widthwise-direction refractive index (Ny) and a film thickness-direction refractive index (Nz) in accordance with JIS K 7142-1996 by using an Abbe's refractometer with sodium D line as a light source. A plane orientation coefficient was determined according to the equation (2).

$$\text{Plane Orientation Coefficient } (\Delta P) = (Nx+Ny)/2 \cdot Nz \qquad (2)$$

[Impact Strength]

A strength of a film against impact punching was measured in an atmosphere having a temperature of 23°C with an impact tester available from Toyo Seiki Seisaku-sho, Ltd in accordance with JIS K7160-1996. An impacting spherical surface used had a diameter of 1/2 inch. The unit was J/$\mu$m.

[Heat Shrinkage Ratio]

A heat shrinkage ratio of a polyester film was measured by the dimensional change test method in accordance with JIS-C-2151-2006.21 except that the test temperature and the heating time were set to be 150°C and 15 minutes respectively.
A test piece was used in accordance with the description of 21.1 (a).

[Production of Laminate for Evaluation]

Onto one side of each of the films produced in the below-described Examples and Comparative Examples was laminated, by a dry laminating method, an unstretched polypropylene film ("P1147", available from Toyobo Co., Ltd.) having a thickness of 70 pm as a heat-sealable resin layer. This dry laminating method was carried out by using a urethane based two-liquid-component curable adhesive (in which a product "TAKELAC (registered trademark) A525S" available from Mitsui Chemicals, Inc. and a product "TAKENATE (registered trademark) A50" available from the same were blended with each other at a ratio (by mass) of 13.5:1). The resultant film was aged at 40°C for 4 days to produce laminates for evaluation. Any adhesive layers made from the urethane based two-liquid-component curable adhesive had a thickness of approximately 4 pm after drying.

[Laminate Strength]

Each laminate produced as above was subjected to a heat-moisture treatment of keeping the laminate in hot water of 130°C for 30 minutes, and was cut out in an undried state into a test piece of 15 mm width and 200 mm length. Laminate strength (after a retort treatment) of the test piece was measured at a temperature of 23°C and a relative humidity of 65% with a Tensilon universal material machine ("TENSILON, UMT-II-500 model", available from Toyo Baldwin Co., Ltd.). The laminate strength was defined as the strength of the test piece when the piece was subjected to peeling treatment at a peeling rate of 200 mm/min and at a peeling angle of 90 degrees, in presence of water between the laminated film and the heat-sealable resin layer.

[Aroma Retention]

Each laminate produced as above was cut into 15 square-cm pieces. Two of the pieces were overlaid on each other with the sealant faces thereof faced inward. Three sides of the resultant product were heat-sealed at a sealing temperature of 160°C and a seal width of 1.0 cm to produce a three side-sealed bag having an inside dimension of 13 cm.
The three side-sealed bag was filled with ion-exchange water, and then an opening of the bag was closed by heat sealing. The heat sealed bag was subjected to a retort sterilization treatment with a retort sterilizer at 135°C for 1 hour and thereafter kept at 80°C for 1 week. An immersion liquid of the bag was used for a tasting by 30 panelists to make a comparison with ion-exchange water, which was prepared for this comparison, on a basis of the following criteria.
○: 3 or less out of the 30 panelists sensed a difference of the taste from the ion-exchange water prepared for the comparison.
Δ: 4 to 10 out of the 30 panelists sensed the difference.
×: 11 or more out of the 30 panelists sensed the difference.

[Raw Material Resin]

(Polybutylene Terephthalate Resin; PBT-1)

Into a stainless steel autoclave equipped with a stirrer, a distillation column and a pressure regulator were fed terephthalic acid, 1,4-butanediol (abbreviated to BD) (BD/terephthalic acid = 2/1 (molar ratio)), and tetrabutyl titanate in a manner that the tetrabutyl titanate left 70 ppm of its titanium atoms in a polybutylene terephthalate resin to be produced. Then, the mixture was subjected to an esterification reaction at 215°C under a pressure of 101 kPa for 4 hours while generated water and THF from the esterification reaction were successively removed from the system. Subsequently, the temperature in the system was increased to 250°C in 1 hour while the pressure in the system was gradually decreased to 0.15 kPa. Under this condition, a polycondensation reaction was carried out for 2 hours to produce a polybutylene terephthalate resin pellet having an intrinsic viscosity of 1.07 dL/g.
Thereafter, the polybutylene terephthalate resin produced above was subjected to solid phase polymerization at 200°C under a reduced pressure for 3 hours with a batch-type solid phase polymerization apparatus to produce a polybutylene terephthalate resin (PBT-1) having an intrinsic viscosity of 1.17 dL/g and an oligomer component content of 10600 ppm.

(Polybutylene Terephthalate Resin; PBT-2)

Polymerization was carried out in a similar way to the above PBT-1 except that the polycondensation reaction time and the solid phase polymerization reaction time were changed to 1.5 hours and 10 hours respectively to produce a polybutylene terephthalate resin (PBT-2) having an intrinsic viscosity of 1.18 dl/g and an oligomer content of 3100 ppm.

(Polybutylene Terephthalate Resin; PBT-3)

Polymerization was carried out in a similar way to the above PBT-1 except that the polycondensation reaction time and the solid phase polymerization reaction time were changed to 1.5 hours and 6 hours respectively to produce a polybutylene terephthalate resin (PBT-3) having an intrinsic viscosity of 1.04 dl/g and an oligomer content of 8800 ppm.

(Polybutylene Terephthalate Resin; PBT-4)

Into a stainless steel autoclave equipped with a stirrer, a distillation column and a pressure regulator were fed terephthalic acid, BD (BD/terephthalic acid = 2/1 (molar ratio)), and tetrabutyl titanate in a manner that the tetrabutyl titanate left 70 ppm of its titanium atoms in a polybutylene terephthalate resin to be produced. Then, the mixture was subjected to an esterification reaction at 215°C under a pressure of 101 kPa for 4 hours while generated water and THF from the esterification reaction were successively removed from the system. Subsequently, the temperature in the system was increased to 250°C in 1 hour while the pressure in the system was gradually decreased to 0.15 kPa. Under this condition, a polycondensation reaction was carried out for 1 hour to produce a polybutylene terephthalate resin pellet having an intrinsic viscosity of 0.8 dL/g and an oligomer component amount of 13700 ppm.

[Example 1]

Into a uniaxial extruder was fed a mixture of PBT-1 and silica particles having an average particle diameter of 2.4 pm, which served as inert particles. The silica particles were mixed in such a manner that the mixture had a silica concentration of 1600 ppm. The mixture was melted at 270°C, and then a melt line was introduced into a 12-element static mixer. In this manner, division and lamination of the polybutylene terephthalate melt were carried out to produce a multilayer melt whose layers were made of the same raw material. The multilayer melt was cast through a T-die at 270°C and then adhered onto a cooling roll having a temperature of 15°C by an electrostatic adhesion method to produce an unstretched sheet.
Subsequently, the unstretched sheet was roll-stretched in a machine direction (MD) at a stretch ratio of 3.5 times at 60°C and then stretched in a transverse direction (TD) at a stretch ratio of 4.0 times through a tenter at 90°C.

The sheet was subjected to a heat treatment under tension at 210°C for 3 seconds and then to a 5% relaxation treatment for 1 second. Thereafter, both edge parts of the resultant film that had been gripped were cut and removed respectively by 10% to produce a mill roll of a polybutylene terephthalate film having a thickness of 15 $\mu$m. The film formation conditions, physical properties and evaluation results of the produced film are shown in Table 1.

[Examples 2 to 7 and Comparative Examples 1 to 5]

The similar procedure to Example 1 was carried out except that the polybutylene terephthalate resin used, raw material compositions and film formation conditions were changed to those for biaxially stretched films described in Table 1 or 2. The film formation conditions, physical properties and evaluation results of the produced films are shown in Table 1 or 2.

[Comparative Example 6]

Into a uniaxial extruder was fed a mixture of PBT-1 and silica particles having an average particle diameter of 2.4 $\mu$m, which served as inert particles. The silica particles were mixed in such a manner that the mixture had a silica concentration of 1600 ppm. The mixture was melted at 270°C, then cast through a T-die at 265°C and adhered onto a cooling roll having a temperature of 15°C by an electrostatic adhesion method to produce an unstretched sheet.

Subsequently, the unstretched sheet was roll-stretched in a machine direction (MD) at a stretch ratio of 2.8 times at 60°C and then stretched in a transverse direction (TD) at a stretch ratio of 3 times through a tenter at 90°C. The sheet was subjected to a heat treatment under tension at 210°C for 3 seconds and then to a 5% relaxation treatment for 1 second. Thereafter, both edge parts of the resultant film that had been gripped were cut and removed respectively by 10% to produce a mill roll of a polybutylene terephthalate film having a thickness of 15 $\mu$m. Neither division nor lamination of the polybutylene terephthalate melt was carried out. The film formation conditions, physical properties and evaluation results of the produced film are shown in Table 2.

[Comparative Example 7]

The similar procedure to Comparative Example 6 was carried out except that the stretch ratios in the machine direction (MD) and the transverse direction (TD) were changed to 3.5 times and 4.0 times respectively. The film formation conditions, physical properties and evaluation results of the produced film are shown in Table 2.

[Reference Example]

A commercially available stretched film (total thickness of 15 pm) that was laminated in a composition of PET/polyamide (Ny)/PET was employed as a reference example.

[Table 1]

| | | | Unit | Example 1 | Example 2 | Example 3 | Example 4 | Example 5 | Example 6 | Example 7 | Example 8 |
|---|---|---|---|---|---|---|---|---|---|---|---|
| Raw Material | PBT | Name | - | PBT-1 | PBT-1 | PBT-1 | PBT-2 | PBT-3 | PBT-1 | PBT-4 | PBT-1 |
| | | Oligomer Amount | ppm | 10600 | 10600 | 10600 | 3100 | 8800 | 10600 | 13900 | 10600 |
| | | Ratio | % | 100 | 100 | 100 | 100 | 100 | 100 | 60 | 100 |
| | PET | Ratio | % | 0 | 0 | 0 | 0 | 0 | 0 | 40 | 0 |
| Condition | | Extrusion Temperature | °C | 270 | 270 | 270 | 270 | 290 | 265 | 270 | 270 |
| | | Cooling Temperature | °C | 15 | 15 | 15 | 15 | 15 | 15 | 15 | 15 |
| | | Staying Time | min | 6.9 | 6.9 | 6.9 | 6.9 | 12.8 | 6.9 | 6.9 | 6.9 |
| | | Presence of Multiple Layers | - | Presence | Presence | Presence | Presence | Presence | Presence | Presence | Presence |
| | | Number of Element | number | 12 | 12 | 12 | 12 | 12 | 12 | 12 | 12 |
| | | MDx | times | 3.5 | 3.8 | 2.8 | 3.5 | 3.5 | 3.5 | 3.5 | 4.5 |
| | | TDx | times | 4 | 4 | 4 | 4 | 4 | 4 | 4 | 4 |
| | | Heat-Setting | °C | 210 | 210 | 210 | 210 | 210 | 210 | 210 | 210 |
| | | Relaxation Ratio | % | 5 | 5 | 5 | 5 | 5 | 5 | 5 | 5 |
| | | Film Formation Stability | - | ◎ | ○ | ○ | ◎ | ◎ | ○ | ○ | × |

| | | Unit | Example 1 | Example 2 | Example 3 | Example 4 | Example 5 | Example 6 | Example 7 | Example 8 |
|---|---|---|---|---|---|---|---|---|---|---|
| Film Physical Property | Thickness | μm | 15 | 15 | 15 | 15 | 15 | 15 | 15 | 15 |
| | Oligomer Content in Film | ppm | 11660 | 11690 | 11700 | 3410 | 11440 | 10918 | 8423 | 11630 |
| | Plane Orientation Coefficient | - | 0.146 | 0.149 | 0.139 | 0.146 | 0.146 | 0.146 | 0.144 | 0.156 |
| | Heat Shrinkage Ratio — MD | % | 1.1 | 1.3 | 0.6 | 1.1 | 1.1 | 1.2 | 1.0 | 1.8 |
| | Heat Shrinkage Ratio — TD | % | 0.6 | 0.6 | 0.5 | 0.6 | 0.5 | 0.6 | 0.5 | 0.7 |
| | Thickness Precision | % | 8.0 | 6.0 | 9.0 | 8.0 | 8.2 | 8.1 | 8.5 | 6.5 |
| | Impact Strength | J/pm | 0.066 | 0.067 | 0.061 | 0.066 | 0.059 | 0.066 | 0.052 | 0.069 |
| | Hz before and after Heating | % | 0.62 | 0.4 | 0.86 | 0.41 | 0.61 | 0.86 | 0.65 | 0.12 |
| | Elution Amount | mg/inch$^2$ | 0.018 | 0.013 | 0.019 | 0.011 | 0.019 | 0.018 | 0.019 | 0.008 |
| Physical Property of Laminate Product | Laminate Strength | N/15 mm | 5.8 | 5.5 | 6.1 | 5.8 | 5.8 | 5.8 | 5.9 | 4.9 |
| | Aroma Retention | - | ○ | ◎ | ○ | ◎ | ○ | ○ | ○ | ◎ |

[Table 2]

| | | | Unit | Comparative Example 1 | Comparative Example 2 | Comparative Example 3 | Comparative Example 4 | Comparative Example 5 | Comparative Example 6 | Comparative Example 7 | Reference Example |
|---|---|---|---|---|---|---|---|---|---|---|---|
| Raw Material | PBT | Name | - | PBT-1 | PBT-2 | PBT-3 | PBT-3 | PBT-4 | PBT-1 | PBT-1 | PET/Ny/PET Laminate Film |
| | | Oligomer Amount | ppm | 10600 | 3100 | 8800 | 8800 | 13900 | 1060 | 1060 | |
| | | Ratio | % | 100 | 100 | 100 | 100 | 50 | 100 | 100 | |
| | PET | Ratio | % | 0 | 0 | 0 | 0 | 50 | 0 | 0 | |
| Condition | | Extrusion Temperature | °C | 270 | 270 | 300 | 270 | 270 | 270 | 270 | |
| | | Cooling Temperature | °C | 15 | 15 | 15 | 15 | 15 | 15 | 15 | |
| | | Staying Time | min | 6.9 | 6.9 | 14.5 | 18.5 | 6.9 | 6.9 | 6.9 | |
| | | Presence of Multiple Layers | - | Presence | Presence | Presence | Presence | Presence | Absence | Absence | |
| | | Number of Element | number | 12 | 12 | 12 | 12 | 12 | - | - | |
| | | MDx | times | 3 | 2.5 | 3.8 | 3.5 | 3.5 | 2.8 | 3.5 | |
| | | TDx | times | 3.3 | 3.5 | 4 | 4 | 4 | 3 | 4 | |
| | | Heat-Setting | °C | 210 | 210 | 210 | 210 | 210 | 210 | 210 | |
| | | Relaxation Ratio | % | 5 | 5 | 5 | 5 | 5 | 5 | 5 | |
| | Film | Formation Stability | - | ○ | ◎ | ◎ | ◎ | ○ | ○ | × | |

(continued)

| | | Unit | Comparative Example 1 | Comparative Example 2 | Comparative Example 3 | Comparative Example 4 | Comparative Example 5 | Comparative Example 6 | Comparative Example 7 | Reference Example |
|---|---|---|---|---|---|---|---|---|---|---|
| Film Physical Property | Thickness | μm | 15 | 15 | 15 | 15 | 15 | 15 | 15 | 15 |
| | Oligomer Content in Film | ppm | 11650 | 3410 | 14080 | 14960 | 7020 | 11690 | 11630 | - |
| | Plane Orientation Coefficient | - | 0.135 | 0.132 | 0.149 | 0.146 | 0.143 | 0.131 | 0.146 | - |
| | Heat Shrinkage Ratio MD | % | 0.8 | 0.4 | 1.3 | 1.2 | 0.9 | 0.4 | 1.1 | 1.2 |
| | Heat Shrinkage Ratio TD | % | 0.2 | 0.1 | 0.6 | 0.6 | 0.5 | 0.1 | 0.6 | 2.1 |
| | Thickness Precision | % | 12.0 | 13.0 | 6.1 | 8.1 | 8.3 | 24.0 | 22.0 | - |
| | Impact Strength | J/μm | 0.047 | 0.041 | 0.047 | 0.045 | 0.048 | 0.042 | 0.066 | 0.07 |
| | Hz before and after Heating | % | 1.29 | 1.12 | 1.1 | 1.24 | 0.59 | 1.28 | 0.62 | - |
| | Elution Amount | mg/inch² | 0.032 | 0.024 | 0.026 | 0.026 | 0.017 | 0.030 | 0.018 | - |
| | Laminate Strength | N/15 mm | 6.1 | 6.3 | 5.9 | 5.7 | 5.9 | 6 | 5.8 | 2.2 |
| Physical Property of Laminate Product | Aroma Retention | - | △ | △ | △ | ◎ | ◎ | ○ | ◎ | ○ |

As shown in Table 1, the biaxially oriented polyester films in Examples 1 to 8 were not only excellent in impact resistance but also had low elution amounts of the oligomer components on the elution test in accordance with FDA (U. S. Food and Drug Administration) §177.166 (c) (2). In addition, the films had excellent aroma retention even after heated at 135°C, this temperature was equivalent to that of a retort sterilization treatment.

On the other hand, the biaxially oriented polybutylene terephthalate films in Comparative Examples 1, 3, 4 and 6 had a large amount of oligomer remaining in the film because the amount of oligomer in the raw material is high or the resin temperature during an extrusion process is high. As a result, the amount of oligomer elution after the elution test was large, and the incense retention was poor.

Also, the biaxially oriented ester film in Comparative Example 5 was, with a high PET content therein, capable of reducing an oligomer elution amount but deteriorates its impact strength, failing to satisfy aimed properties.

In addition, the commercially available stretched film that was laminated in the composition of PET/polyamide (Ny)/PET in the Reference Example was excellent in impact resistance and aroma retention but suffered from film delamination that arose during a laminate strength measurement after a retort sterilization treatment, resulting in a deterioration of its laminate strength.

The result shown in Comparative Example 6 led to the following findings. Lowering a stretch ratio to enhance film formation stability led to an insufficient plane orientation degree. This insufficient degree increased elution of an oligomer component from a film, further causing a high variation of a haze value after heating.

Besides, the result shown in Comparative Example 7 led to the findings that heightening a stretch ratio to increase a plane orientation degree without laminating a film to form a multilayer caused frequent breakage during film formation and thus rendered stable film formation difficult.

INDUSTRIAL APPLICABILITY

The present invention can yield a biaxially oriented polyester film that is suitable for a food packaging material subjected to boiling and retort sterilization treatments, has excellent impact resistance, bending resistance and mechanical properties and, simultaneously, achieves low elution. The biaxially oriented polyester film is expected to largely contribute to the industry from a perspective of its potential for extensive applicability to a packaging material suitably used, in particular, for retort pouch packaging.

**Claims**

1. A biaxially oriented polyester film having the following characteristics (a) to (d):

   (a) the film comprises a resin composition containing 60 mass% or more of polybutylene terephthalate;
   (b) a thickness precision in a widthwise direction of the film is 1 to 20%;
   (c) an oligomer component contained in the film is 2000 to 12000 ppm; and
   (d) a mass of the oligomer component eluted into a 50% ethanol solution is 0.02 mg or less per square inch of the film when the film is immersed in the 50% ethanol solution and heated at 66°C for 2 hours.

2. The biaxially oriented polyester film according to claim 1, wherein a plane orientation coefficient of the film is 0.136 to 0.160.

3. A method for producing the biaxially oriented polyester film according to claim 1 or 2, the method comprising following steps (a) to (f) and satisfying following requirement (g):

   (a) a step of feeding the resin composition containing 60 mass% or more of polybutylene terephthalate into an extruder;
   (b) a step of heating and melting the resin composition to produce a molten resin composition of 240 to 290°C;
   (c) a step of laminating the molten resin composition to have 60 layers or more;
   (d) a step of extruding the molten resin composition through a T-die to produce a molten resin composition sheet;
   (e) a step of bringing the molten resin composition sheet into contact with a cooling roll and then cooling the sheet to produce an unstretched resin sheet;
   (f) a step of biaxially stretching the unstretched sheet; and
   (g) in the step (b), the time from when the molten resin composition reaches 240°C until it is extruded through the T-die is 2 to 13 minutes.

4. The method for producing the biaxially oriented polyester film according to claim 3, wherein the biaxial stretching step is carried out by a simultaneous biaxial stretching method or a sequential biaxial stretching method.

**INTERNATIONAL SEARCH REPORT**

| International application No. |
| --- |
| PCT/JP2018/001900 |

A. CLASSIFICATION OF SUBJECT MATTER

Int.Cl. C08J5/18(2006.01)i, B29C47/04(2006.01)i, B29C55/12(2006.01)i

According to International Patent Classification (IPC) or to both national classification and IPC

B. FIELDS SEARCHED

Minimum documentation searched (classification system followed by classification symbols)

Int.Cl. C08J5/00-5/02, C08J5/12-5/22, B29C47/00-47/96, B29C55/00-55/30, B29K67/00, B29L7/00, B32B1/00-43/00

Documentation searched other than minimum documentation to the extent that such documents are included in the fields searched

| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2015/178390 A1 (TOYOBO CO., LTD.) 26 November 2015, claim 1, paragraphs [0001], [0024]-[0039], [0079], table 1, examples 1-4 & US 2017/0088682 A1, claim 1, paragraphs [0001], [0033]-[0052], [0105], table 1, examples 1-4 & EP 3147313 A1 & CA 2949471 A1 & CN 106459441 A & KR 10-2017-0013281 A & TW 201602184 A | 1-4 |

☒ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05 April 2018 (05.04.2018) | 17 April 2018 (17.04.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/001900 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2005-154640 A (NIPPON-ESTER CO., LTD.) 16 June 2005, claim 1, paragraphs [0011], [0017], [0020], [0041], table 1, examples 1-4, 6-7 (Family: none) | 1-4 |
| Y | JP 2003-26824 A (UNITIKA LTD.) 29 January 2003, claim 1, paragraphs [0017]-[0021], [0043]-[0046], [0051]-[0052], tables 1-2, examples 1-5 (Family: none) | 1-4 |
| Y | JP 2013-154605 A (DAINIPPON PRINTING CO., LTD.) 15 August 2013, claims 1-2, paragraphs [0001]-[0002] & US 2013/0196099 A1, claims 1, 3, paragraphs [0001]-[0002] & EP 2623318 A1 | 1-4 |
| Y | JP 7-145252 A (TEIJIN LTD.) 06 June 1995, claims, paragraph [0043], examples 1-6 (Family: none) | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013154605 A

- JP 2012214248 A